# EUROPÄISCHE PATENTSCHRIFT

(11) **EP 1 606 538 B1**
(45) Veröffentlichungstag und Bekanntmachung des Hinweises auf die Patenterteilung: **15.07.2009**
(21) Anmeldenummer: 04720869.9
(22) Anmeldetag: 16.03.2004
(51) Int. Cl.: F16J 15/16, F16K 1/12, F16K 3/24

(54) **RINGSPALTDICHTUNG FÜR EIN VENTIL**
ANNULAR-GAP SEAL FOR A VALVE
JOINT A FENTE ANNULAIRE POUR SOUPAPE

(30) Priorität: 21.03.2003 DE 10312753
(43) Veröffentlichungstag der Anmeldung: 21.12.2005
(73) Patentinhaber: Mokveld Valves B.V., 2800 AE Gouda (NL)
(72) Erfinder: VERWOERD, Gerrit, H., 3425 ER Snelrewaard (NL)
(74) Vertreter: Bauer, Dirk
(86) Internationale Anmeldenummer: PCT/EP2004/002704
(87) Internationale Veröffentlichungsnummer: WO 2004/083691

(56) Entgegenhaltungen:
- DE-A- 2 929 389
- DE-A- 3 731 349
- FR-A- 1 391 410

## Beschreibung

### Einleitung

Die Erfindung betrifft eine Ringspaltdichtung für ein Ventil, mittels dessen der Fluss eines Fluids von einer Hochdruckseite zu einer Niederdruckseite des Ventils in einer Sperrstellung sperrbar ist, wobei das Ventil einen Zylinder aufweist, der von dem Fluid durchströmbar und in dem ein Kolben axial verschiebbar ist und wobei in der Sperrstellung mittels der Ringspaltdichtung, die in einer in dem Zylinder umlaufenden Nut einliegt, ein Ringspalt zwischen dem Kolben und dem Zylinder dichtbar ist.

Derartige Ringspaltdichtungen für Ventile sind allgemein bekannt. Die DE 37 31 349 A1 beispielsweise offenbart eine trapezförmige Ringspaltdichtung, die in einer gleichfalls trapezförmigen Nut einliegt und die mittels eines Federringes unter eine Vorspannung setzbar ist. Ein Regelventil, in dem eine derartige Ringspaltdichtung typischer Weise zum Einsatz kommt, offenbart beispielhaft die DE 29 29 389 A1.

Die bekannten Ringspaltdichtungen weisen in der Sperrstellung Leckageströme auf, die in industriellen Produktions- und Steuerungsprozessen aus Überlegungen zur Qualitätssicherung zunehmend weniger toleriert werden. Die Ursachen dieser Leckageströme liegen neben Verschleiß- und Alterungserscheinungen an den Dichtelementen in der unzureichenden radialen Zustellmöglichkeit der bekannten Ringspaltdichtungen und in der mangelnden Konstanz ihrer Materialeigenschaften bei Änderungen der Betriebstemperatur.

Hinzu kommt, dass die bekannten Ringspaltdichtungen - gerade auch aufgrund der Leckageströme - nur sehr bedingt zur Sicherung von Anlagenteilen gegenüber Rückschlagströmen geeignet sind.

### Aufgabe

Der Erfindung liegt die Aufgabe zugrunde, eine Ringspaltdichtung vorzuschlagen, die die Dichtigkeit sowohl in der vorgesehenen Strömungsrichtung als auch entgegen der vorgesehenen Strömungsrichtung gewährleistet und hierbei insbesondere die Leckageströme auch unter verschiedenen Betriebstemperaturen minimiert.

### Lösung

Ausgehend von der bekannten Ringspaltdichtung wird diese Aufgabe nach der Erfindung gelöst durch zwei spiegelsymmetrisch in der Nut neben einander angeordnete Dichtringe, wobei in der Sperrstellung durch das Fluid aus der Hochdruckseite eine Dichtlippe eines der Niederdruckseite zugewandeten ersten Dichtrings fluiddicht an den Kolben und eine Dichtfläche des ersten Dichtrings fluiddicht an eine Nutwandung pressbar ist.

Die Zweiteilung der Ringspaltdichtung in zwei Dichtringe ermöglicht eine Gestaltoptimierung hinsichtlich eines Selbstverstärkungseffektes der Dichtwirkung bei steigendem Differenzdruck zwischen der Hochdruckseite und der Niederdruckseite. Durch die symmetrische Gestaltung wirkt die erfindungsgemäße Ringspaltdichtung in der vorgesehenen Strömungsrichtung und entgegen der vorgesehenen Strömungsrichtung gleichermaßen effektiv.

Die erfindungsgemäße Ringspaltdichtung ist derart gestaltet, dass in der Sperrstellung durch das Fluid aus der Hochdruckseite eine Dichtschulter des der-Niederdruckseite zugewandten ersten Dichtrings fluiddicht an eine in der Nut axial vorspringende, umlaufende Nase pressbar ist. Die Paarung einer Dichtschulter mit einer in der Nut umlaufenden Nase gewährleistet eine wiederum erhöhte Dichtwirkung zwischen dem Dichtring und der Nutwandung am Ventilgehäuse.

Die Dichtringe der erfindungsgemäßen Ringspaltdichtung weisen besonders vorteilhafter Weise ein C-Profil auf und sind in der Sperrstellung durch das Fluid aus der Hochdruckseite das C-Profil des der Niederdruckseite zugewandten ersten Dichtrings aufweitbar. Durch die Aufweitung wird der Dichtring der erfindungsgemäßen Ringspaltdichtung zusätzlich zwischen dem Nutgrund und der Mantelfläche des Kolbens verklemmt, wodurch erneut die Dichtwirkung zwischen Dichtring und Nutgrund - also Gehäuse - und Mantel erhöht wird.

Der Steigerung der Dichtwirkung dient in besonders einfacher Weise auch ein Übermaß der erfindungsgemäßen Ringspaltdichtung gegenüber dem Abstand zwischen Kolben und Nutgrund, so dass die Ringspaltdichtung mit Vorspannung in die Nut einlegbar ist.

In einer besonders bevorzugten Ausführungsform weist die erfindungsgemäße Ringspaltdichtung ein Stabilisierungselement auf, das in Richtung der Nut mit den Dichtringen einlegbar ist. Ein solches Stabilisierungselement besteht vorzugsweise aus einem Werkstoff, dessen Eigenschaften im Rahmen der Betriebstemperaturen höchstens geringen Schwankungen unterliegen. In einer Vielzahl von Anwendungsfällen bewährt sich als Werkstoff insbesondere Stahl, dessen Alterungs- und Medienbeständigkeit zudem durch unterschiedliche Legierungen auch in allgemein bekannter Weise gesteigert und an die Anforderungen angepasst werden kann.

Besonders bevorzugt ist das Stabilisierungselement eine torusförmig einlegbare Schraubenfeder. Die Schraubenfeder ermöglicht insbesondere, dass die Dichtlippen der Dichtringe radial in Richtung des Kolbens vorspannbar sind.

### Ausführungsbeispiel

Die Erfindung wird nachfolgend anhand eines Ausführungsbeispiels erläutert. Es zeigen
- Fig. 1a: eine Schnittdarstellung eines Ventils mit erfindungsgemäßer Ringspaltdichtung,
- Fig. 1b: das weitere Umfeld der Ringspaltdichtung in diesem Ventil,
- Fig. 1c: das engere Umfeld der Ringspaltdichtung in diesem Ventil,
- Fig. 2: eine Schnitt-Explosionsdarstellung der Ringspaltdichtung,
- Fig. 3a: das Stabilisierungselement der Ringspaltdichtung und
- Fig. 3b: eine weitere Ansicht des Stabilisierungselements,
- Fig. 4a: eine Detailansicht der Ringspaltdichtung bei offenem Ventil,
- Fig. 4b: diese Detailansicht in Sperrstellung unter normalen Druckverhältnissen und
- Fig. 4c: diese Detailansicht in Sperrstellung bei Strömung entgegen der vorgesehenen Strömungsrichtung.

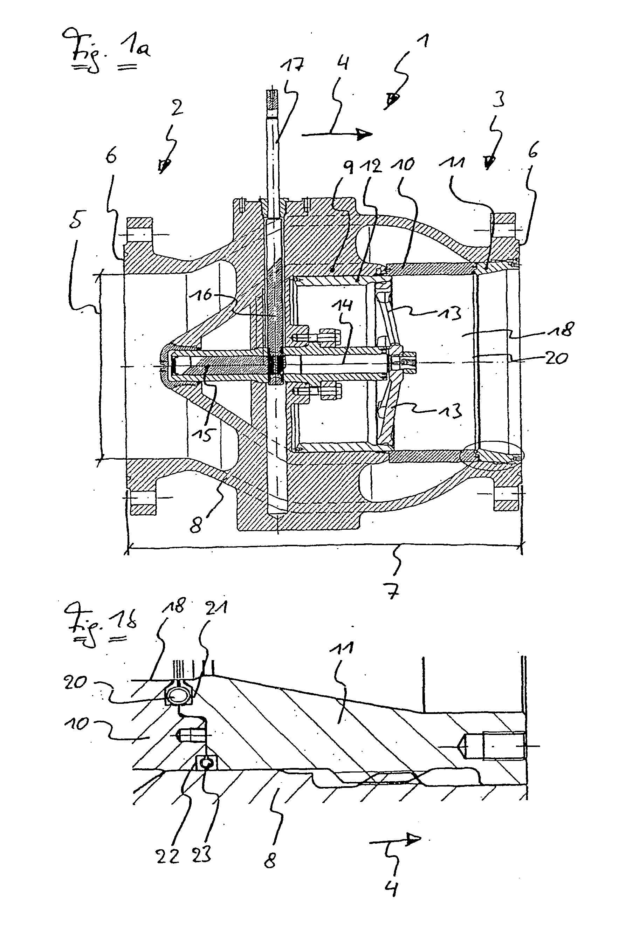

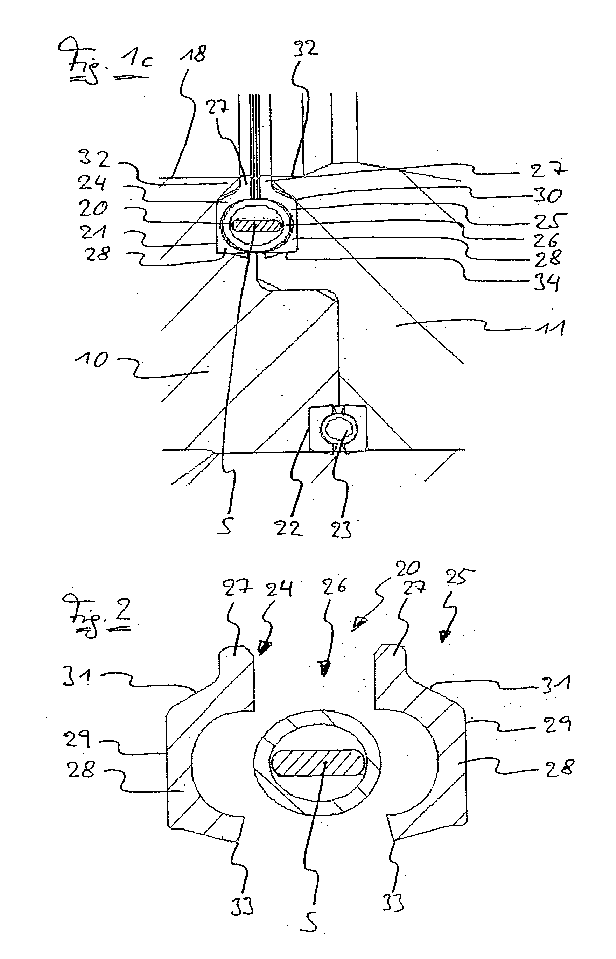

Figur 1 zeigt ein Ventil 1, mittels dessen der Fluss eines nicht dargestellten Fluids von einem Ventileintritt 2 zu einem Ventilaustritt 3 des Ventils 1 regelbar ist. Die Bezeichnungen von Ventileintritt 2 und Ventilaustritt 3 beziehen sich auf die vorgesehene Strömungsrichtung 4 des Fluids durch das Ventil 1, in der in der hier dargestellten geöffneten Stellung des Ventils 1 maximale Durchflussraten und eine minimale Abnutzung des Ventils 1 realisiert sind. Das beispielhaft gezeigte Ventil 1 weist einen Nenndurchmesser 5 von 24 inch, an Ventileintritt 2 und Ventilaustritt 3 Flanschflächen 6 gemäß ANSI 900 RTJ für einen Nenndruck von 6.2 MPa [900 psi] und zwischen den Flanschflächen 6 eine Gesamtlänge 7 von 1568 mm auf. Ventile mit prinzipiell gleichem Aufbau finden mit Nenndurchmessern zwischen 50,8 bis 1219 mm [2 und 48 inch] für Nenndrücke von 1.03 bis 17.2 MPa [150 bis 2500 psi] zur Durchflussregelung von beispielsweise Öl, Gas oder Wasser oder von Multiphasen-Gemischen Verwendung. Alternativ kann das Ventil auch nach dem API-Standard ausgeführt sein.

Das Ventil 1 weist in einem gegossenen Gehäuse 8 einen Zylinder 9 auf, der von dem Fluid durchströmbar ist. Das Fluid dringt durch einen als Käfig 10 ausgebildeten Abschnitt radial in den Zylinder 9 ein und verlässt diesen - und das Ventil 1 - in der vorgesehenen Strömungsrichtung 4. Der Käfig 10 ist mittels einer nach Art einer Kontermutter in das Gehäuse 8 des Ventils 1 eingeschraubten Austrittsbuchse 11 des Zylinders 9 in dem Gehäuse 8 fixiert.

In dem Zylinder 9 ist ein Kolben 12 axial verschiebbar. Der Kolben 12 weist keine Stirnfläche auf und ist mittels radial verlaufender Speichen 13 mit einer axial verlaufenden Kolbenstange 14 fest verbunden. Die Kolbenstange 14 weist eine unter 45° schrägverzahnte ebene Fläche 15 auf, die mit einer gleichfalls unter 45° schrägverzahnten ebenen Fläche 16 einer radial verlaufenden und radial verschiebbaren Schaltstange 17 kämmt. Eine lineare Radialbewegung der Schaltstange 17 bewirkt so unmittelbar hysterese- und spielfrei eine lineare Axialbewegung der Kolbenstange 14 und ermöglicht damit eine exakte Positionierung des Kolbens 12 in dem Zylinder 9.

Der Kolben 12, die Kolbenstange 14 und die Schaltstange 17 sind in jeder Betriebsstellung im Kräftegleichgewicht. Unabhängig von den anliegenden Druckverhältnissen ist das Ventil 1 uneingeschränkt schaltbar, die Geschwindigkeit des Schaltvorgangs ist seitens des Ventils 1 lediglich durch die Massenträgheit des Kolbens 12, der Kolbenstange 14 und der Schaltstange 17 beschränkt.

Bei Verschiebung des Kolbens 12 in dem Zylinder 9 verschließt dessen Mantelfläche 18 die nicht dargestellten Öffnungen in dem Käfig 10 und sperrt damit in der Sperrstellung den Fluss des Fluids durch das Ventil 1. In der Sperrstellung ist der zwischen der Mantelfläche 18 des Kolbens 12 und dem Zylinder 9 verbleibende Ringspalt 19 mittels einer Ringspaltdichtung 20 dichtbar. Der Zylinder 9 in der Sperrstellung und der in dieser Stellung gebildete Ringspalt 19 zum Zylinder 9 ist ausschließlich in den Detailansichten 4b und 4c dargestellt.

Die Ringspaltdichtung 20 liegt - wie aus den Detailansichten 1b und 1c ersichtlich - in einer in dem Zylinder 9 umlaufenden Nut 21 ein, die zwischen dem Käfig 10 und der Austrittsbuchse 11 ausgebildet ist. Mittels einer in einer zweiten Nut 22 zwischen dem Käfig 10 und der Austrittsbuchse 11 angeordneten Lippendichtung 23 sind diese gegenüber dem Gehäuse 8 abgedichtet.

Die Ringspaltdichtung 20, die in Figur 2 in einem Profilschnitt nach Art einer Explosionszeichnung gezeigt ist, besteht aus einem - bezogen auf das Ventil 1- inneren Dichtring 24 und einem spiegelsymmetrisch aufgebauten äußeren Dichtring 25, die beispielsweise aus PP bestehen und deren Form mittels eines Stabilisierungselements 26 stabilisiert wird. Jeder Dichtring 24, 25 weist eine Dichtlippe 27 auf, die in der Sperrstellung fluiddicht an die Mantelfläche 18 des Kolbens 12 pressbar ist. An die Dichtlippe 27 schließt sich ein C-Profil 28 an, dessen äußere Dichtfläche 29 an die Form der seitliche Nutwandung 30 angepasst und fluiddicht an diese pressbar ist. Das C-Profil 28 bildet unterhalb der Dichtlippe 27 eine Dichtschulter 31, die an die Form einer in der Nut 21 axial vorspringenden, umlaufenden Nase 32 angepasst und fluiddicht an diese pressbar ist. Das C-Profil 28 endet in einer unteren Dichtkante 33, die an den Nutgrund 34 der Nut 21 pressbar ist.

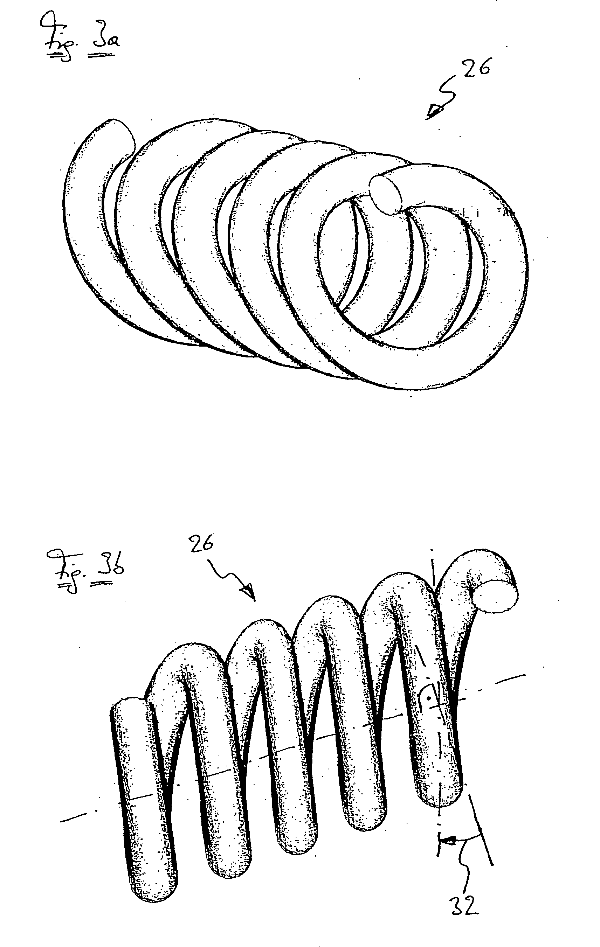

Das Stabilisierungselement 26 in Form einer torusförmig gebogenen Schraubenfeder ist zwischen die C-Profile 28 der Dichtringe 24, 25 eingelegt. Die Gänge der Schraubenfeder sind - wie in den Figuren 3a und 3b ersichtlich - um einen Winkel 35 von etwa 10° gegen die Längsachse 36 der Schraubenfeder geneigt. Die Schraubenfeder kann daher radial (bezogen auf den Kolben 12) gestaucht zwischen die Dichtringe 24, 25 eingelegt werden, wodurch eine Vorspannung der Dichtringe 24, 25 in radialer Richtung bewirkt wird. In die Schraubenfeder ist zu Montagezwecken ein nur in den Figuren 1c und 2 dargestellter Stützring S eingelegt.

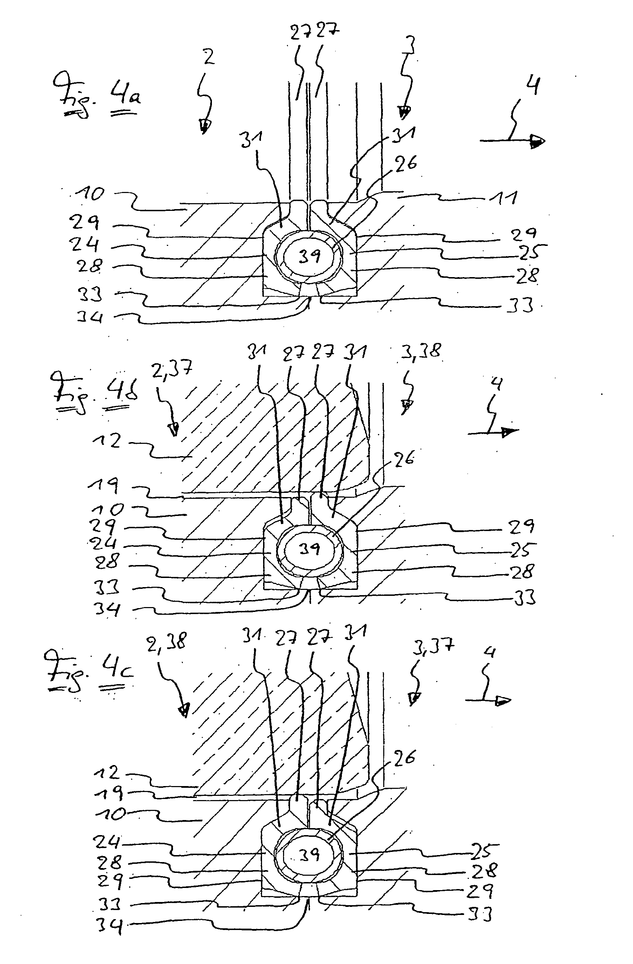

Wie in Figur 4a gezeigt, stehen die Dichtlippen 27 bei offenem Ventil 1 leicht aus der Nut 21 vor - eben so weit, dass sie mit der Mantelfläche 18 des Kolbens 12 in der Sperrstellung in Kontakt kommen und den Ringspalt 19 zwischen der Mantelfläche 18 des Kolbens 12 und dem Zylinder 9 verschließen. In der Sperrstellung - dargestellt in den Figuren 4b und 4c - bewirkt jede Erhöhung des Differenzdrucks zwischen Ventileintritt 2 und Ventilaustritt 3 des Ventils 1 eine Selbstverstärkung der Dichtwirkung der erfindungsgemäßen Ringspaltdichtung 20.

In dem in Figur 4b dargestellten Betriebsfall ist in der Sperrstellung der Druck am Ventileintritt 2 höher als am Ventilaustritt 3. Dies ist - bei der vorgesehenen Strömungsrichtung 4 - der Normalfall: bezogen auf die jeweiligen Drücke ist hier am Ventileintritt 2 die Hochdruckseite 37, am Ventilaustritt 3 die Niederdruckseite 38. Zwischen den Dichtringen 24, 25 bildet sich ein Druckgefälle: im Zwischenraum 39 zwischen den C-Profilen 28 bildet sich zunächst ein zwischen dem Druck auf der det sich zunächst ein zwischen dem Druck auf der Hochdruckseite 37 und dem Druck auf der Niederdruckseite 38 liegender mittlerer Druck aus.

Unter dem Einfluss der jeweils anliegenden Druckdifferenz verformen sich die Dichtringe 24, 25: Der innere Dichtring 24 wird durch den gegenüber dem mittleren Druck höheren Druck der Hochdruckseite 37 radial gestaucht, legt sich vorübergehend an das Stabilisierungselement 26 an und erleichtert durch den so vergrößerten Ringspalt 19 den Druckausgleich zwischen der Hochdruckseite 37 und dem Zwischenraum 39 zwischen den C-Profilen 28. Der äußere Dichtring 25 wird durch den gegenüber der Niederdruckseite 38 höheren mittleren Druck - beziehungsweise später den Druck der Hochdruckseite 37 - radial aufgeweitet und legt sich mit seiner äußeren Dichtfläche 29 an die Nutwandung 30, insbesondere mit der Dichtschulter 31 an die an der Nut 21 ausgebildete Nase 32 an. Außerdem wird der äußere Dichtring 25 mit zunehmender Druckdifferenz mit seiner Dichtkante 33 an den Nutgrund 34 gepresst. Zusätzlich erhöht sich durch die radiale Aufweitung der Druck von der Dichtlippe 27 des äußeren Dichtrings 25 auf die Mantelfläche 18 des Kolbens 12. Insgesamt wird die Dichtwirkung der Ringspaltdichtung 20 erhöht.

Der in Figur 4c dargestellte Betriebsfall entspricht dem Fall einer - in der Regel unerwünschten, aber gerade bei schnellen Schaltvorgängen üblicherweise auftretenden - Rückschlagströmung entgegen der vorgesehenen Strömungsrichtung 4. Gegenüber dem in Figur 4b dargestellten Normalfall ist die Hochdruckseite 37 nun am Ventilaustritt 3, die Niederdruckseite 38 am Ventileintritt 2 ausgebildet. Aufgrund des spiegelsymmetrischen Aufbaus der Ringspaltdichtung 20 wird hier nun der äußere Dichtring 25 radial gestaucht und der innere Dichtring 24 radial aufgeweitet. Auch für den Fall einer Strömung entgegen der vorgesehenen Strömungsrichtung 4 wird mittels der erfindungsgemäßen Ringspaltdichtung 20 die Dichtwirkung also erhöht.

### In den Figuren sind

- 1: Ventil
- 2: Ventileintritt
- 3: Ventilaustritt
- 4: vorgesehene Strömungsrichtung
- 5: Nenndurchmesser
- 6: Flanschfläche
- 7: Gesamtlänge
- 8: Gehäuse
- 9: Zylinder
- 10: Käfig
- 11: Austrittsbuchse
- 12: Kolben
- 13: Speiche
- 14: Kolbenstange
- 15: Fläche
- 16: Fläche
- 17: Schaltstange
- 18: Mantelfläche
- 19: Ringspalt
- 20: Ringspaltdichtung
- 21: Nut
- 22: Nut
- 23: Lippendichtung
- 24: Innerer Dichtring
- 25: Äußerer Dichtring
- 26: Stabilisierungselement
- 27: Dichtlippe
- 28: C-Profil
- 29: Dichtfläche
- 30: Seitliche Nutwandung
- 31: Dichtschulter
- 32: Nase
- 33: Untere Dichtkante
- 34: Nutgrund
- 35: Winkel
- 36: Längsachse
- 37: Hochdruckseite
- 38: Niederdruckseite
- 39: Zwischenraum
- S: Stützring

## Patentansprüche

1. Ringspaltdichtung (20) für ein Ventil (1), mittels dessen der Fluss eines Fluids von einer Hochdruckseite (37) zu einer Niederdruckseite (38) des Ventils (1) in einer Sperrstellung sperrbar ist, wobei das Ventil (1) einen Zylinder (9) aufweist, der von dem Fluid durchströmbar und in dem ein Kolben (12) axial verschiebbar ist und wobei in der Sperrstellung mittels der Ringspaltdichtung (20), die in einer in dem Zylinder (9) umlaufenden Nut (21) einliegt, ein Ringspalt (19) zwischen dem Kolben (12) und dem Zylinder (9) dichtbar ist, wobei die Nut (21) beidseitig jeweils eine axial vorspringende, umlaufende Nase (32) aufweist, zwei spiegelsymmetrisch in der Nut (21) axial neben einander angeordnete Dichtringe (24, 25) vorhanden sind und in der Sperrstellung durch das Fluid aus der Hochdruckseite (37) eine Dichtfläche (29) eines der Niederdruckseite zugewandten ersten Dichtrings (24, 25) fluiddicht an eine Nutwandung (30) pressbar ist, ***dadurch gekennzeichnet, dass*** in der Sperrstellung durch das Fluid aus der Hochdruckseite (37) eine Dichtschulter (31) des der Niederdruckseite (38) zugewandten ersten Dichtrings (24, 25) fluiddicht an die in der Nut (21) axial vorspringende, umlaufende Nase (32) und eine Dichtlippe (27) des der Niederdruckseite (38) zugewandeten ersten Dichtrings (24, 25) fluiddicht an den Kolben (12) pressbar ist.

2. Ringspaltdichtung (20) nach dem vorgenannten Anspruch, ***dadurch gekennzeichnet, dass*** die Dichtringe (24, 25) ein C-Profil (28) aufweisen und dass in der Sperrstellung durch das Fluid aus der Hochdruckseite (37) das C-Profil (28) des der Niederdruckseite (38) zugewandten ersten Dichtrings (24, 25) aufweitbar ist.

3. Ringspaltdichtung (20) nach einem der vorgenannten Ansprüche, ***gekennzeichnet durch*** ein Übermaß gegenüber dem Abstand zwischen Kolben (12) und Nutgrund (34), so dass die Ringspaltdichtung (20) mit Vorspannung in die Nut (21) einlegbar ist.

4. Ringspaltdichtung (20) nach einem der vorgenannten Ansprüche, ***gekennzeichnet durch*** ein Stabilisierungselement (26), das in Richtung der Nut (21) mit den Dichtringen (24, 25) einlegbar ist.

5. Ringspaltdichtung (20) nach dem vorgenannten Anspruch, ***dadurch gekennzeichnet, dass*** das Stabilisierungselement (26) eine torusförmig einlegbare Schraubenfeder ist.

6. Ringspaltdichtung (20) nach Anspruch 4, ***dadurch gekennzeichnet, dass*** die Dichtringe (24, 25) mittels des Stabilisierungselement (26) radial in Richtung des Kolbens (12) vorspannbar sind.

## Claims

1. Annular gap seal (20) for a valve (1), by means of which the flow of a fluid from a high-pressure side (37) to a low-pressure side (38) of the valve (1) can be blocked in a blocking position, wherein the valve (1) has a cylinder (9), through which the fluid can flow and in which a piston (12) can be axially displaced, and wherein, in the blocking position, an annular gap (19) between the piston (12) and the cylinder (9) can be sealed by means of the annular gap seal (20), which is situated in a groove (21) which runs around the inside of the cylinder (9), wherein the groove (21) has on both sides an axially projecting circumferential projection (32), two sealing rings (24, 25) are present, which are arranged axially adjacent to each other mirror-symmetrically in the groove (21), and, in the blocking position, a sealing face (29) of a first sealing ring (24, 25) which faces the low-pressure side can be pressed by the fluid from the high-pressure side (37) in a fluid-tight manner against a groove wall (30), **characterised in that**, in the blocking position, a sealing shoulder (31) of the first sealing ring (24, 25), which faces the low-pressure side (38) can be pressed by the fluid from the high-pressure side (37) in a fluid-tight manner against the circumferential projection (32) which projects axially in the groove (21), and a sealing lip (27) of the first sealing ring (24, 25), which faces the low-pressure side (38), can be pressed in a fluid-tight manner against the piston (12).

2. Annular gap seal (20) according to the preceding claim, **characterised in that** the sealing rings (24, 25) have a C-profile (28) and **in that**, in the blocking position, the C-profile (28) of the first sealing ring (24, 25), which faces the low-pressure side (38), can be widened by the fluid from the high-pressure side (37).

3. Annular gap seal (20) according to one of the preceding claims, **characterised by** an excess compared to the distance between the piston (12) and the groove bottom (34), so that the annular gap seal (20) can be placed with pre-tensioning into the groove (21).

4. Annular gap seal (20) according to one of the preceding claims, **characterised by** a stabilisation element (26), which can be placed in the direction of the groove (21) with the sealing rings (24, 25).

5. Annular gap seal (20) according to the preceding claim, **characterised in that** the stabilisation element (26) is a helical spring, which can be inserted in a toroidal manner.

6. Annular gap seal (20) according to Claim 4, **characterised in that** the sealing rings (24, 25) can be pre-tensioned radially in the direction of the piston (12) by means of the stabilisation element (26).

## Revendications

1. Joint d'étanchéité pour fente annulaire (20) destiné à une soupape (1), au moyen de laquelle l'écoulement d'un fluide depuis un côté à haute pression (37) vers un côté basse pression (38) de la soupape (1) peut être bloqué dans une position de blocage, moyennant quoi la soupape (1) présente un cylindre (9), qui peut être traversé par le fluide et dans lequel un piston (12) peut être déplacé axialement et moyennant quoi dans la position de blocage au moyen du joint d'étanchéité pour fente annulaire (20), qui repose dans une rainure (21) faisant le tour de la circonférence du cylindre (9), une fente annulaire (19) entre le piston (12) et le cylindre (9)peut être rendue étanche, moyennant quoi la rainure (21) présente des deux côtés respectivement un nez (32) en faisant le tour, faisant saillie axialement, deux bagues d'étanchéité (24,25) symétriques dans la rainure (21) disposées axialement à côté l'une de l'autre sont présentes et dans la position de blocage induite par le fluide provenant du côté à haute pression (37), une surface d'étanchéité (29) d'une première bague d'étanchéité (24,25) tournée vers le côté à basse pression peut être pressée de manière étanche au fluide sur une paroi de rainure (30), **caractérisé en ce que** dans la position de blocage induite par le fluide provenant du côté à haute pression (37), un épaulement d'étanchéité (31) de la première bague d'étanchéité (24,25) tournée vers le côté à basse pression (38) peut être pressé sur le nez (32) en faisant le tour, faisant saillie axialement dans la rainure (21) et une lèvre d'étanchéité (27) de la première bague d'étanchéité (24,25) tournée vers le côté à basse pression (38) peut être pressée de manière étanche au fluide sur le piston (12).

2. Joint d'étanchéité pour fente annulaire (20) selon la revendication précédente, **caractérisé en ce que** les bagues d'étanchéité (24,25) présentent en profilé en C (28) et **en ce que** dans la position de blocage induite par le fluide provenant du côté à haute pression (37), le profilé en C (28) de la première bague d'étanchéité (24,25) tournée vers le côté à basse pression (38) peut être élargi.

3. Joint d'étanchéité pour fente annulaire (20) selon une des revendications précédentes, **caractérisé par** un surdimensionnement par rapport à l'espacement entre le piston (12) et le fond de rainure (34), de telle sorte que le joint d'étanchéité pour fente annulaire (20) puisse être placé avec précontrainte dans la rainure (21).

4. Joint d'étanchéité pour fente annulaire (4) selon une des revendications précédentes, **caractérisé par** un élément de stabilisation (26), qui peut être placé dans la direction de la rainure (21) avec les bagues d'étanchéité (24,25).

5. Joint d'étanchéité pour fente annulaire (20) selon la revendication précédente, **caractérisé en ce que** l'élément de stabilisation est un ressort à boudin pouvant être placé en forme toroïdale.

6. Joint d'étanchéité pour fente annulaire (20) selon la revendication 4, **caractérisé en ce que** les bagues d'étanchéité (24 ; 25) peuvent être précontraintes radialement dans la direction du piston (12) au moyen de l'élément de stabilisation (26).
